# EUROPÄISCHE PATENTSCHRIFT

(11) **EP 0 923 693 B1**
(45) Veröffentlichungstag und Bekanntmachung des Hinweises auf die Patenterteilung: **03.01.2001**
(21) Anmeldenummer: 97944702.6
(22) Anmeldetag: 05.09.1997
(51) Int. Cl.: F16L 13/16

(54) **ROHRVERBINDUNG**
PIPE FITTING
RACCORD DE TUBULURE

(30) Priorität: 09.09.1996 DE 19637688
(43) Veröffentlichungstag der Anmeldung: 23.06.1999
(73) Patentinhaber: Mapress GmbH & Co. KG, 40764 Langenfeld (DE)
(72) Erfinder: DIEDERICHS, Rolf, D-47877 Willich (DE); FOERING, Herbert, D-42697 Solingen (DE); FRANZEN, Rainer, D-47802 Krefeld (DE)
(74) Vertreter: Meissner, Peter E., Dipl.-Ing.
(86) Internationale Anmeldenummer: DE9702030
(87) Internationale Veröffentlichungsnummer: WO9811377

(56) Entgegenhaltungen:
- EP-A- 0 343 395
- WO-A-92/09840
- US-A- 4 850 621

## Beschreibung

Die Erfindung betrifft eine Rohrverbindung, bestehend aus einem Preßfitting aus korrosionsbeständigem Werkstoff und einem Leitungsrohr aus korrosionsbeständigem Werkstoff gemäß dem Oberbegriff des Patentanspruches 1.

Eine solche Rohrverbindung wird im Dokument DE-C-3901562 offenbart.

Eine Rohrverbindung bestehend aus einem Preßfitting und einem eingeschobenen Leitungsrohr ist auch dem Firmenprospekt Mannesmann-Preßfitting-System (Arbeits- und Verlegerichtlinie für Rohre und Preßfittings aus unlegiertem Stahl in der Heizungsinstallation, Ausgabe 11/94) zu entnehmen. Danach ist es bekannt, für den Außenschutz die Leitungsrohre beispielsweise mit einem Kunststoffmantel aus Polypropylen zu versehen. Zuvor wird auf das Rohr eine Grundierung aufgebracht.

Bei der Installation von Trinkwasserleitungen wird aus Korrosionsschutzgründen kein unlegierter Stahl für das Leitungsrohr, sondern ein korrosionsbeständiger Stahl (Edelstahl) vorzugsweise entsprechend der Werkstoffnummer 1.4401 und 1.4571 verwendet [siehe Firmenprospekt Mannesmann-Preßfitting-System (Arbeits- und Verlegerichtlinie für Rohre und Preßfittings aus nichtrostendem Stahl für die Trinkwasserinstallation, 8/1994)]. Alternativ wird von anderen Herstellern dafür auch Kupfer verwendet (siehe Firmenprospekt der Firma Viega "profipress", 11/94). Für besondere Anwendungsfälle wird auch Titan eingesetzt (DE-C-39 01 562).

Alle genannten korrosionsbeständigen Materialien sind teuer und es werden deshalb große Anstrengungen unternommen, um Material einzusparen. Da in der Regel die Außendurchmesser genormt sind, und aus verbindungstechnischen Gründen nicht verändert werden dürfen, gibt es nur die Möglichkeit, die Wanddicke zu reduzieren. Hier werden aber schnell, insbesondere was die Beschädigungsgefahr beim Handling betrifft, Grenzen erreicht. Die untere Grenze liegt für den Abmessungsbereich bis etwa 2" bei 1,0 mm Wanddicke. Von der Korrosionsbeständigkeit und Innendruckfestigkeit her könnte man theoretisch die Wanddicke noch weiter absenken, aber solche Rohre lassen sich praktisch nicht mehr faltenfrei biegen und auch die Verbindung solcher dünnwandiger Rohre mit einem Preßfitting ist problematisch.

Es ist auch im Stand der Technik eine Rohrverbindung bekannt, bestehend aus einem Preßfitting aus Kupfer und einem darin eingeschobenen Leitungsrohr, ebenfalls aus Kupfer. Um die Festigkeit der Rohrverbindung zu steigern, wird in den Preßfitting bis zur Sicke eine Stützhülse eingeschoben. Dazu weist die Stützhülse an ihrem inneren Ende eine trompetenartige, einen größeren Durchmesser aufweisende Erweiterung auf. Der Außendurchmesser des zylindrischen Teiles der Stützhülse wird so gewählt, dass zwischen dem in einem Wulst angeordneten Dichtring und der Stützhülse ein mit dem Pressfitting verbindbares Leitungsrohr einschiebbar ist.

In der EP-A-343395 ist eine Preßverbindung eines Anschlußstutzens einer Armatur oder eines Fittings aus Metallguß mit einem Rohr, vorzugsweise aus hochlegiertem Stahl, dessen Quetschgrenze und Elastizitätsmodul größer ist als die des Anschlußstutzens offenbart. Die Verpressung von Metallguß bereitet Probleme und aus diesem Grunde ist die Wanddicke des Stutzens so bemessen, daß er auf ein seinem Innendurchmesser angepaßtes elastisches Rohr aufpreßbar ist. Um auch ein Kunststoffrohr als Leitungsrohr verwenden zu können, dessen Quetschgrenze und Elastizitätsmodul kleiner ist als die des Stutzens, wird in das Kunststoffrohr eine elastische Stützhülse gesteckt, deren Quetschgrenze und Elastizitätsmodul größer ist als die des Stutzens und die das Kunststoffrohr dichtend gegen den Stutzen drückt.

Die Erfindung hat sich zur Aufgabe gestellt, eine Rohrverbindung der gattungsmäßigen Art anzugeben, mit der unter Beibehaltung des bewährten Preßsystems Material signifikant eingespart werden kann und Biegungen und Verpressungen einwandfrei durchführbar sind.

Diese Aufgabe wird mit den im kennzeichnenden Teil des Anspruches 1 angegebenen Merkmalen gelöst. Vorteilhafte Weiterbildungen sind Bestandteil von Unteransprüchen.

Bei der erfindungsgemäßen Rohrverbindung werden die Leitungsrohre und die Preßfittings in bekannter Weise aus einem korrosionsbeständigen Werkstoff hergestellt. Vorzugsweise sind dies Edelstahl, Kupfer oder Titan. Das zu diesem System gehörende dünnwandige metallische Leitungsrohr bildet mit der mit ihm stoffschlüssig verbundenen Umhüllung ein Verbundrohr, so daß dadurch die Beulsteifigkeit erhöht wird. Außerdem schützt die Umhüllung das Leitungsrohr vor Oberflächenschäden beim Handling und innerbetrieblichen Transport. Zur Aufrechterhaltung der Qualität der Verpressung wird vor dem Einschub in den Preßfitting oder vor dem Aufschub auf den Preßfitting der Endenbereich mit einer Stützhülse versehen. Wahlweise kann dies eine Außen- oder eine Innenstützhülse sein. Im letzteren Fall ist die Abmantelung der Umhüllung im Endbereich erforderlich, damit die Metall-auf-Metall-Verpressung erhalten bleibt. Die stoffschlüssig mit dem Leitungsrohr verbundene Umhüllung ist vorzugsweise ein Kunststoff aus Polyethylen oder Polypropylen. Wesentlich höhere Steifigkeiten kann man dadurch erreichen, wenn für die Umhüllung ein Faserverbundwerkstoff verwendet wird. Die verstärkenden Fasern können Kohlenstoff- oder Aramit- oder Keramikfasern sein. Mit dieser Anordnung ist eine Wanddickenreduzierung auf 0,6 mm und mehr möglich. Für die stoffschlüssige Verbindung zwischen Leitungsrohr und Umhüllung wird vorzugsweise ein Kleber verwendet.

Die Vorteile dieser Rohrverbindung sind darin zu sehen, daß
1. über die Wanddickenreduzierung teures Material eingespart wird und trotz der Umhüllung die Leitungsrohre insgesamt leichter werden;
2. die empfindliche Oberfläche beim Handling und Transport geschützt wird;
3. die Korrosionsbeständigkeit und die Innendruckfestigkeit nicht beeinträchtigt werden;
4. das bewährte zeitsparende Preßsystem beibehalten werden kann.

In der Zeichnung wird anhand dreier Ausführungsbeispiele die erfindungsgemäße Rohrverbindung näher erläutert.

Es zeigen:
- Figur 1: einen halbseitigen Längsschnitt einer ersten Ausführungsform der erfindungsgemäßen Rohrverbindung
- Figur 2: wie Figur 1, jedoch eine zweite Ausführungsform
- Figur 3: wie Figur 1, jedoch mit einem Innenpreßfitting.

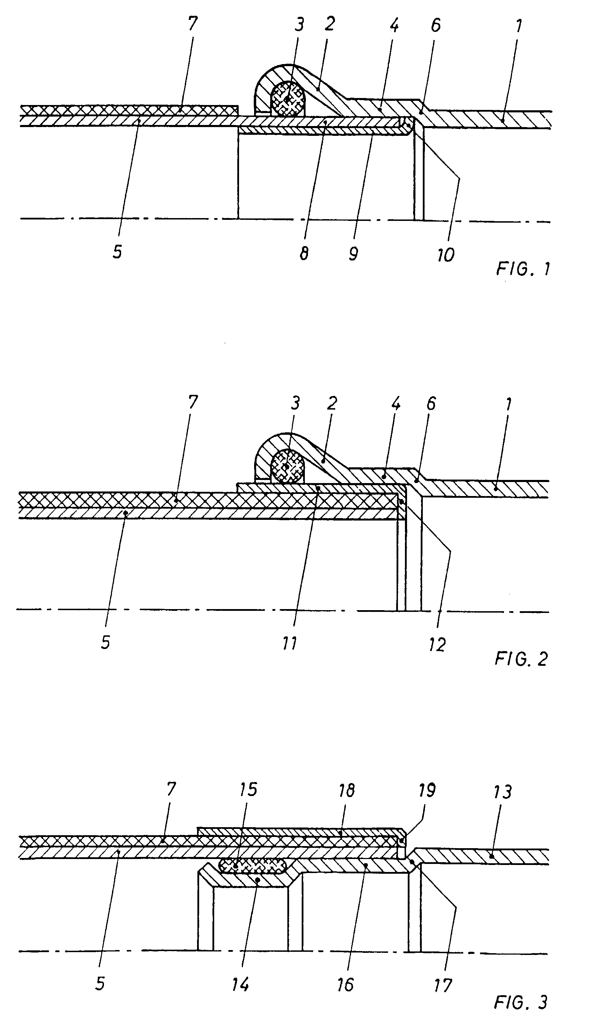

Figur 1 zeigt einen halbseitigen Längsschnitt einer ersten Ausführungsform der erfindungsgemäßen Rohrverbindung. Sie besteht aus einem Preßfitting 1, aus einem korrosionsbeständigen Werkstoff wie Edelstahl, Kupfer oder Titan, der am offenen Ende einen ringförmigen Wulst 2 aufweist, in dem ein Dichtring 3 angeordnet ist. An den Wulst 2 schließt sich ein zylindrischer Abschnitt 4 an, der am Ende der Erstreckung dann übergeht in eine den Anschlag für das zu verbindende Leitungsrohr bildende sickenförmige Vertiefung 6. Das dünnwandige Leitungsrohr 5, hier übertrieben dick dargestellt, bildet zusammen mit der darauf über einen Kleber stoffschlüssig angeordneten Umhüllung 7 ein Verbundrohr. Bevor das Leitungsrohr 5 in den Preßfitting 1 eingeschoben wird, wird die Umhüllung 7 vom Endbereich 8 des Leitungsrohres 5 abgemantelt. Um die Qualität der Verpressung aufrechtzuerhalten und die Gefahr eines Einbeulens zu mindern, wird vor dem Einschieben eine Innenstützhülse 9 auf den Endbereich 8 des Leitungsrohres 5 aufgeschoben. Diese Innenstützhülse 9 ist aus dem gleichen Werkstoff gefertigt wie der Preßfitting 1 und das Leitungsrohr 5. Der nach außen sich erstreckende Kragen 10 der Innenstützhülse 9 kommt nach dem Einschieben in den Preßfitting 1 an der sickenförmigen Vertiefung 6 zur Anlage.

Figur 2 zeigt eine zweite Ausführungsform der erfindungsgemäßen Rohrverbindung, wobei für gleiche Teile gleiche Bezugszeichen verwendet worden sind. Im Unterschied zur Ausführungsform gemäß Figur 1 wird die Umhüllung 7 nicht abgemantelt, sondern vor dem Einschieben in den Preßfitting 1 eine Außenstützhülse 11 auf den Endbereich aufgeschoben. Diese Außenstützhülse 11 ist ebenfalls aus dem gleichen Werkstoff gefertigt wie der Preßfitting 1 und das dünnwandige Leitungsrohr 5. Der nach innen sich erstreckende Kragen 12 kommt nach dem Einschieben an der sickenförmigen Vertiefung 6 des Preßfittings 1 zur Anlage.

Figur 3 zeigt ebenfalls im halbseitigen Längsschnitt eine dritte Ausführungsform der erfindungsgemäßen Rohrverbindung. Sie besteht aus einem Innenpreßfitting 13 aus einem korrosionsbeständigen Werkstoff wie Edelstahl, Kupfer oder Titan. Am offenen Ende weist der Innenpreßfitting 13 einen nach innen sich erstreckenden Abschnitt 14 auf, in dem eine Dichtung 15 angeordnet ist. Dieser Abschnitt 14 geht einwärts gesehen über in einen zylindrischen Abschnitt 16, der am Ende der Erstreckung einen sickenartigen Absatz 17 aufweist. Dieser Absatz 17 bildet den Anschlag für das auf den Innenpreßfitting 13 aufgeschobene Leitungsrohr 5. Wie in der in Figur 1 dargestellten Ausführungsform bildet das Leitungsrohr 5 mit der darauf über einen Kleber stoffschlüssig angeordneten Umhüllung 7 ein Verbundrohr. Vor dem Aufschieben des Verbundrohres auf den Innenpreßfitting 13 wird eine Außenstützhülse 18 auf den Endbereich des Verbundrohres aufgeschoben. Die Außenstützhülse 18 ist aus dem gleichen Werkstoff gefertigt wie der Innenpreßfitting 13 und das dünnwandige Leitungsrohr 5. Der nach innen sich erstreckende Kragen 19 kommt nach dem Aufschieben an dem sickenartigen Absatz 17 zur Anlage.

## Patentansprüche

1. Rohrverbindung, bestehend aus einem Preßfitting (1,13) aus korrosionsbeständigem Werkstoff wie Edelstahl, Titan, Kupfer oder Kupferlegierung, der mindestens einen nach außen oder nach innen sich erstreckenden und einen Dichtring (3,15) aufnehmenden Abschnitt (2,14) und einen daran anschließenden zylindrischen Bereich (4,16) aufweist, der am Ende der Erstreckung mit einer einen Anschlag bildenden Sicke (6,17) versehen ist und einem Leitungsrohr (5), das aus dem gleichen korrosionsbeständigem Werkstoff wie der Preßfitting (1,13) hergestellt ist, dessen Ende in oder auf den Preßfitting (1,13) bis zum Anschlag ein- oder aufschiebbar ist
dadurch gekennzeichnet,
daß das dünnwandige Leitungsrohr (5) eine stoffschlüssig mit ihm verbundene nichtmetallische Umhüllung (7) aufweist, die zusammen mit dem Leitungsrohr (5) ein Verbundsystem bildet und vor dem Einschub in den Preßfitting (1) oder Aufschub auf den Preßfitting (13) der Endenbereich des Leitungsrohres (5) mit einer Stützhülse (9,11,18) die aus dem gleichen korrosionsbeständigem Werkstoff wie der Preßfitting (1,13) und das Leitungsrohr (5), hergestellt ist, versehen ist, wobei im Falle der Anordnung einer Innenstützhülse (9) das mit der nichtmetallischen Umhüllung versehene Leitungsrohr (5) im Verpreßbereich abgemantelt wird, um eine Metall-auf-Metall-Verpressung sicherzustellen.

2. Rohrverbindung nach Anspruch 1,
dadurch gekennzeichnet,
daß im Endenbereich des in den Preßfitting (1) eingeschobenen Verbundrohres die Innenstützhülse (9) einen nach außen sich erstreckenden Kragen (10) aufweist.

3. Rohrverbindung nach einem der Anspruch 1,
dadurch gekennzeichnet,
daß der Endbereich des in den Preßfitting (1) eingeschobenen Verbundrohres mit einer einen nach innen sich erstreckenden Kragen (12) aufweisenden Außenstützhülse (11) versehen ist.

4. Rohrverbindung nach einem der Anspruch 1,
dadurch gekennzeichnet,
daß der Endbereich des auf den Preßfitting (13) aufgeschobenen Verbundrohres mit einer einen nach innen sich erstreckenden Kragen (19) aufweisenden Außenstützhülse (18) versehen ist.

5. Rohrverbindung nach einem der Ansprüche 1 bis 4,
dadurch gekennzeichnet,
daß die Umhüllung aus einem Kunststoff gefertigt ist.

6. Rohrverbindung nach einem der Ansprüche 1 bis 4,
dadurch gekennzeichnet,
daß die Umhüllung ein Faserverbundwerkstoff ist.

7. Rohrverbindung nach einem der Ansprüche 1 bis 6,
dadurch gekennzeichet,
daß zwischen Leitungsrohr und Umhüllung ein Kleber vorgesehen ist.

## Claims

1. Pipe connection, consisting of a press fitting (1, 13) made of a corrosion-resistant material such as stainless steel, titanium, copper or a copper alloy, which comprises at least one section (2, 14) that extends outwards or inwards, carries a sealing ring (3, 15), and has a cylindrical portion (4, 16) at the end which, at the end of its extension, is provided with a shoulder (6, 17) forming an end-stop, and a pipe (5) which is made of the same corrosion-resistant material as the press fitting (1, 13), whose end can be pushed into or onto the press fitting (1, 13) as far as the end-stop,
**characterised in that**
the thin-walled pipe (5) comprises a non-metallic sheathing (7) attached self-retainingly to it, which together with the pipe (5) forms a composite system, and before being pushed into the press fitting (1) or pushed onto the press fitting (13) the end area of the pipe (5) is provided with a supporting sleeve (9, 11, 18) made of the same corrosion-resistant material as the press fitting (1, 13) and the pipe (5), and in the case of the arrangement with an internal supporting sleeve (9) the pipe (5) provided with the non-metallic sheathing is stripped of its sheathing in the press-fit region so as to ensure metal-to-metal contact pressure.

2. Pipe connection according to Claim 1,
**characterised in that**
at the end area of the composite pipe pushed into the press fitting (1) the internal supporting sleeve (9) has a lip (10) extending outwards.

3. Pipe connection according to Claim 1,
**characterised in that**
the end area of the composite pipe pushed into the press fitting (1) is provided with an external supporting sleeve (11) which has a lip (12) extending inwards.

4. Pipe connection according to Claim 1,
**characterised in that**
the end area of the composite pipe pushed onto the press fitting (13) is provided with an external supporting sleeve (18) which has a lip (19) extending inwards.

5. Pipe connection according to any of Claims 1 to 4,
**characterised in that**
the sheathing is made from a plastic material.

6. Pipe connection according to any of Claims 1 to 4,
**characterised in that**
the sheathing is a fibre composite material.

7. Pipe connection according to any of Claims 1 to 6,
**characterised in that**
an adhesive is provided between the pipe and its sheathing.

## Revendications

1. Liaison pour tube, constituée d'un raccord de pressage (1, 13) en une matière résistant à la corrosion, comme de l'acier spécial, du titane, du cuivre ou un alliage de cuivre, qui présente au moins un tronçon (2, 14) s'étendant vers l'extérieur ou vers l'intérieur et recevant une bague d'étanchéité (3, 15) et une zone cylindrique (4, 16) s'y raccordant, qui est munie à l'extrémité de son extension d'une moulure (6, 17), formant une butée, et d'un conduit (5), qui est fabriqué dans la même matière résistant à la corrosion que le raccord de pressage (1, 13) dont l'extrémité peut être introduite dans le raccord de pressage (1, 13), ou mise en place sur celui-ci, jusqu'à la butée,
caractérisée en ce que le conduit (5) à paroi mince présente une enveloppe (7) non métallique reliée à celui-ci par liaison de matière, qui forme, en même temps que le conduit (5), un système composite et, avant l'introduction dans le raccord de pressage (1) ou la mise en place sur le raccord de pressage (13), la zone d'extrémité du conduit (5) est munie d'un manchon d'appui (9, 11, 18) qui est fabriqué dans la même matière résistant à la corrosion que le raccord de pressage (1, 13) et le conduit (5), le conduit (5), muni de l'enveloppe non métallique, étant dénudé, dans la zone de pressage, dans le cas de l'agencement d'un manchon d'appui interne (9), pour garantir un pressage métal-métal.

2. Liaison pour tube selon la revendication 1,
caractérisée en ce que, dans la zone d'extrémité du tube composite introduit dans le raccord de pressage (1), le manchon d'appui interne (9) présente un collet (10) s'étendant vers l'extérieur.

3. Liaison pour tube selon la revendication 1,
caractérisée en ce que la zone d'extrémité du tube composite introduit dans le raccord de pressage (1) est munie d'un manchon d'appui externe (11) présentant un collet (12) s'étendant vers l'intérieur.

4. Liaison pour tube selon la revendication 1,
caractérisée en ce que la zone d'extrémité du tube composite mis en place sur le raccord de pressage (13) est munie d'un manchon d'appui externe (18) présentant un collet (19) s'étendant vers l'intérieur.

5. Liaison pour tube selon une des revendications 1 à 4,
caractérisée en ce que l'enveloppe est fabriquée en une matière synthétique.

6. Liaison pour tube selon une des revendications 1 à 4,
caractérisée en ce que l'enveloppe est constituée d'une matière composite à base de fibres.

7. Liaison pour tube selon une des revendications 1 à 6,
caractérisée en ce qu'une colle est prévue entre le conduit et l'enveloppe.
